# EUROPÄISCHE PATENTSCHRIFT

(11) **EP 1 082 890 B1**
(45) Veröffentlichungstag und Bekanntmachung des Hinweises auf die Patenterteilung: **16.06.2004**
(21) Anmeldenummer: 99117680.1
(22) Anmeldetag: 08.09.1999
(51) Int. Cl.: A01C 1/04

(54) **Papierprodukt mit eingeschlossenem Samen**
Paper product with seeds enclosed therein
Produit en papier avec des graines incorporées à son intérieur

(43) Veröffentlichungstag der Anmeldung: 14.03.2001
(73) Patentinhaber: d Agnone, Uwe, 53773 Hennef (DE); Schäfer, Tim, Dipl.-Ing., 53119 Bonn (DE)
(72) Erfinder: d Agnone, Uwe, 53773 Hennef (DE); Schäfer, Tim, Dipl.-Ing., 53119 Bonn (DE)
(74) Vertreter: von Kreisler, Alek, Dipl.-Chem.

(56) Entgegenhaltungen:
- DE-A- 19 503 971
- DE-U- 29 823 151
- US-A- 4 584 790
- US-A- 5 073 401
- PATENT ABSTRACTS OF JAPAN vol. 018, no. 523 (C-1256), 4. Oktober 1994 (1994-10-04) & JP 06 181604 A (YUKIHIKO NITTA), 5. Juli 1994 (1994-07-05)
- PATENT ABSTRACTS OF JAPAN vol. 1999, no. 14, 22. Dezember 1999 (1999-12-22) & JP 11 243717 A (TMS:KK), 14. September 1999 (1999-09-14)

## Beschreibung

Die Erfindung betrifft eine Papier-Kaschiermaschine und ein Verfahren zur Herstellung von 2-lagigen Papierprodukten gemäß den Oberbegriffen der Ansprüche 1 und 5.

Derartige Papierprodukte, auch kaschiertes Papier genannt, sowie die Maschinen zu deren Herstellung sind hinlänglich bekannt. Durch das Übereinanderlegen von zwei oder mehr Papierflächen wird ein starkes, bedruckbares Papierprodukt geformt, das z.B. als Postkarte, Pappe, Verpackungsmaterial etc. Verwendung findet. Eine besondere Eigenart, beispielsweise für Werbezwecke, kann dieses Papierprodukt jedoch lediglich durch einen besonderen Druck oder eine besondere Formgebung aufweisen. Damit ist es schwer, ein individuelles Papierprodukt, das sich von der Masse der gewöhnlichen Papierprodukte abhebt, anzubieten.

JP 06181604 beschreibt eine Maschine zum Fixieren und Aufwickeln von Samen, mit einer Transporteinrichtung, einer Anleimstation und einer Kaschier- und Pressstation, wobei die Transporteinrichtung aufgerollte Endlospapier zu den einzelnen Stationen führt. Zwischen Anleimstation und der Kaschier- und Pressstation ist eine Samenzuführvorrichtung angeordnet. Durch die Samenzuführvorrichtung werden keimfähige Pflanzensamen auf das Endlospapier aufgebracht. Über einen gemeinsamen Kettentrieb sind die einzelnen Stationen miteinander gekoppelt und mit einem einzelnen Antriebsmotor verbunden.

Der Erfindung liegt die Aufgabe zu Grunde, eine Papierkaschiermaschine zur Herstellung von zweilagigen, mit Samen versehenen Papierprodukten zu schaffen, bei der der Samendurchsatz erhöht ist.

Die Aufgabe wird gelöst durch eine Papierkaschiermaschine mit den Merkmalen des Anspruchs 1 sowie durch ein Verfahren zur Herstellung eines zweilagigen Papierprodukts mit den Merkmalen des Anspruchs 5.

Erfindungsgemäß weist die erfindungsgemäße Papierkaschiermaschine eine Samenzuführvorrichtung auf mit mehreren nebeneinanderliegenden, auf einer gemeinsamen Welle angeordneten Volumendosierelementen, die Rotationskörper mit ausgeformten Dosierkammern sind, um die keimfähigen Pflanzensamen in mehreren nebeneinanderliegenden Samenfeldern auf einen ersten Bogen Papier aufzubringen. Durch das entsprechend ausgestaltete erfindungsgemäße Verfahren werden mehrere nebeneinanderliegende Samenfelder auf den ersten Bogen Papier aufgebracht, wodurch das Papierprodukt erzeugt wird.

Dadurch, daß zwischen der Anleimstation und der Kaschierstation eine Samenzuführvorrichtung angeordnet ist, durch die keimfähige Pflanzensamen auf einen ersten Bogen Papier zugeführt werden, erhält man auf besonders kostengünstige und einfache Weise ein Papierprodukt bei dem zwischen den Papierbögen zumindest ein Samenfeld mit keimfähigen Pflanzensamen angeordnet ist.

Auf diese Weise erhält man ein Papierprodukt, daß besonders als Werbemittel, aber auch als Geschenk verwendbar ist, wobei jedoch eine gute Bedruckbarkeit gewährleistet ist. Das Papierprodukt kann vom Empfänger auf einfache Weise eingepflanzt werden, was zur

Keimung des Planzensamens und damit zu einem dauerhaften Geschenk, führt.

Vorteilhafte Ausführungsformen der Erfindung sind in den Unteransprüchen genannt.

Im folgenden wird unter Bezugnahme auf die Zeichnung ein Ausführungsbeispiel der Erfindung näher erläutert.

Es zeigt:
Fig. 1 eine Seitenansicht der erfindungsgemäßen Papier-Kaschiermachine,
Fig. 2 eine Seitenansicht der Samenzuführvorrichtung, und
Fig. 3 eine perspektivische Ansicht des Papierprodukts, wobei die das Papierprodukt bildenden Papierbögen teilweise aufgeklappt dargestellt sind.

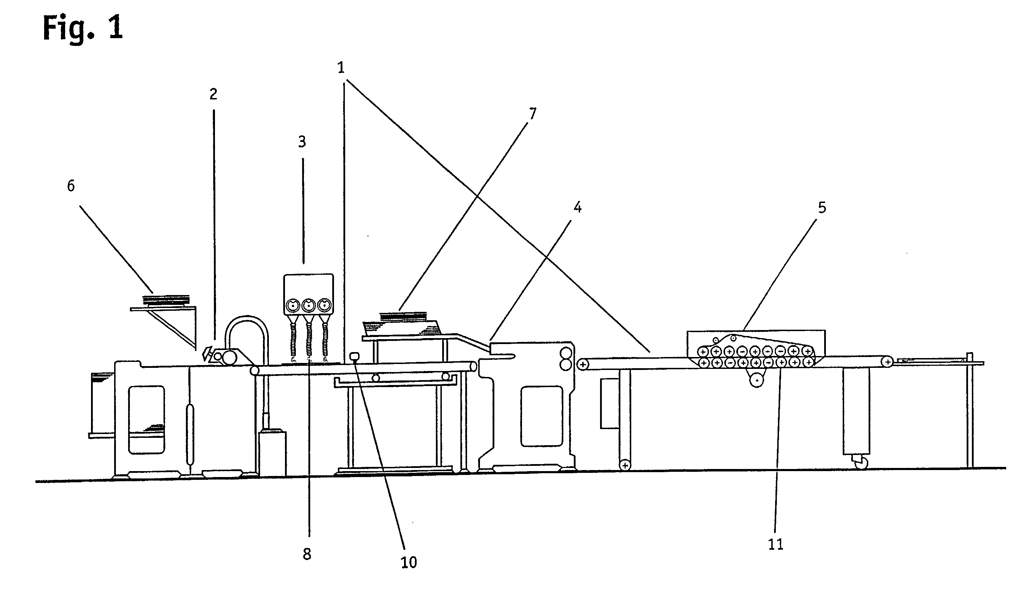

Fig. 1 zeigt die erfindungsgemäße Papier-Kaschiermaschine zur Herstellung von 2-lagigen Papierprodukten mit einer Transporteinrichtung 1, einer Anleimstation 2, einer Samenzuführvorrichtung 3, einer Kaschierstation 4, und einer Preßstation 5. Dabei werden mittels der Transporteinrichtung 1 die Papierbögen 6, 7 zu den einzelnen Stationen geführt, wobei zwischen der Anleimstation 2 und der Kaschierstation 4 durch die Samenzuführvorrichtung 3 keimfähige Pflanzensamen 8 als Samenfelder 9 auf den ersten Papierbogen 6 aufgebracht werden.

Im vorliegenden Ausführungsbeispiel ist die Transporteinrichtung 1 über ein Steuerelement 10, daß ein nicht dargestelltes Sensorelement aufweist derart steuerungstechnisch mit der Samenzuführvorrichtung 3 verbunden, daß ein genaues Positionieren der Pflanzensamen 8 in Samenfelder 9, die definierte Abstände zueinander aufweisen, möglich ist.

Für eine spätere Weiterverarbeitung ist es besonders vorteilhaft, wenn als keimfähige Pflanzensamen 8 eine Samenart mit einem maximalen Tausendkorngewicht von 20 g zugeführt wird, wobei die Pflanzensamen zum Schutz vor Leim und mechanischen Einwirkungen vorhergehend mit einer Schutzhülle, beispielsweise Methylcellulose, ummantelt werden können.

Als Leim in der Anleimstation 2 kann ein biologisch abbaubarer Leim eingesetzt werden.

Die Transporteinrichtung 1 sollte dabei eine maximale Geschwindigkeit von 1800 Bögen pro Stunde nicht überschreiten.

Die Preßstation 5 weist im vorliegenden Ausführungsbeispiel Weichwalzen 11 auf, die während des Anpreßvorganges eine maximale Anpreßkraft von 32 N ausüben.

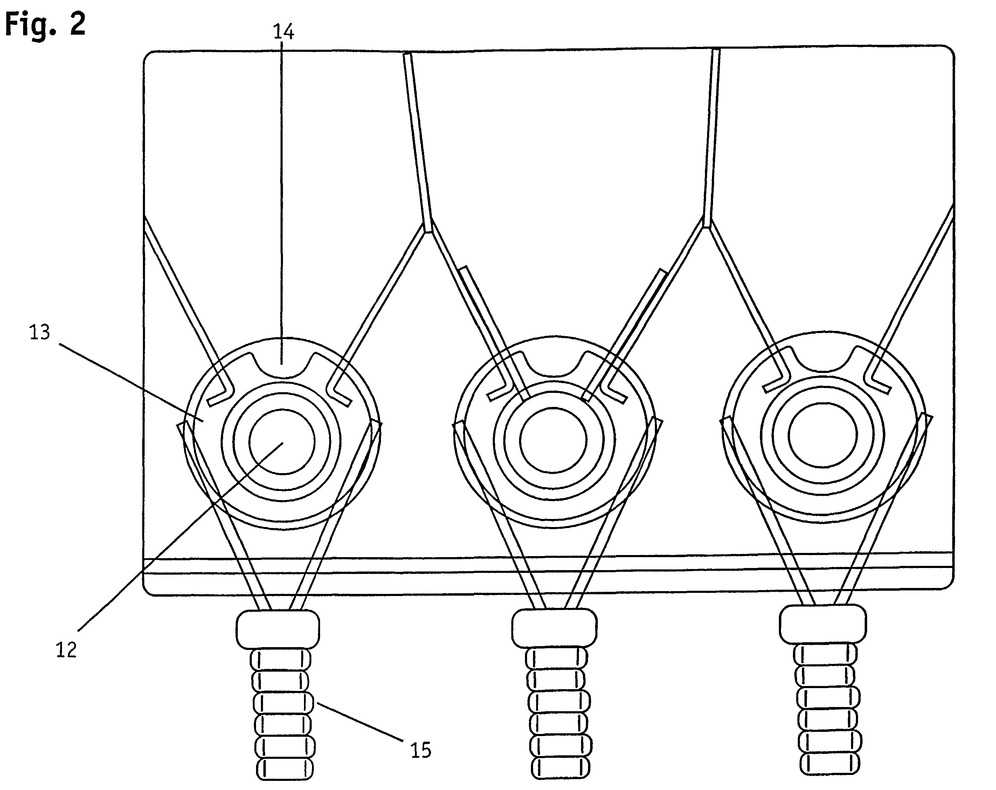

Fig. 2 zeigt in einer Seitenansicht die Samenzuführvorrichtung 3. Im vorliegenden Ausführungsbeispiel sind auf drei nebeneinanderliegenden antreibbaren Wellen 12 jeweils sechs Volumendosierelemente 13 angeordnet. Die Volumendosierelemente 13 sind als Rotationskörper mit jeweils einer Dosierkammer 14 für die aufzubringenden keimfähigen Pflanzensamen 8 ausgebildet. Mit einer derartigen Vorrichtung können in einem Dosiervorgang achtzehn Samenfelder 9 über teleskopartige Zuführelemente 15 aufgebracht werden.

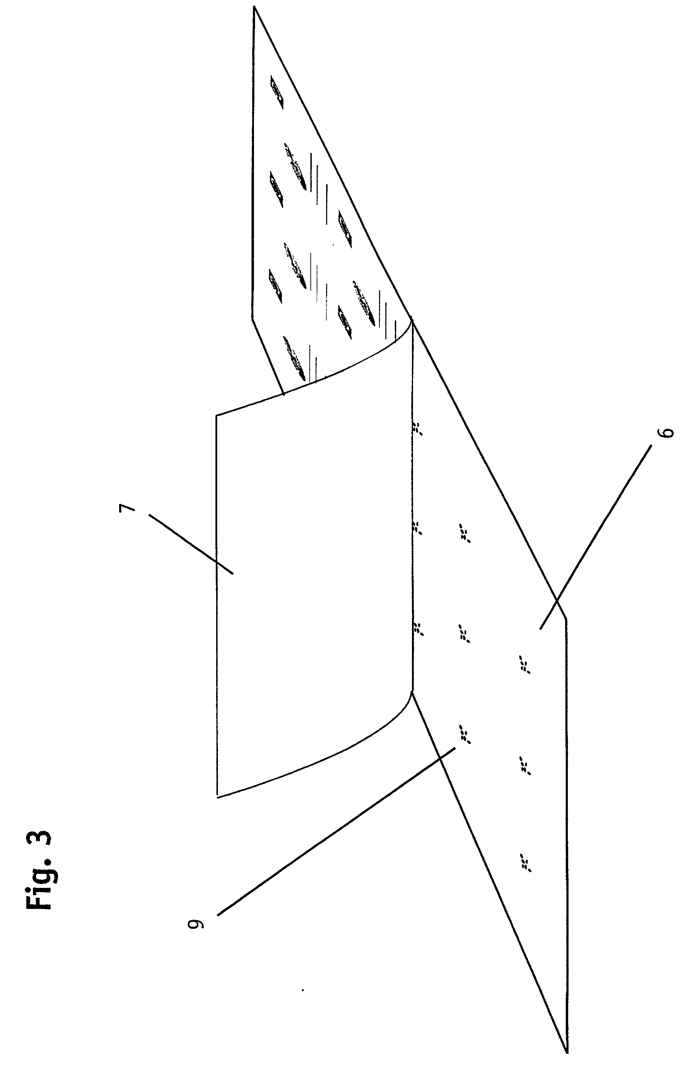

Figur 3 zeigt ein Papierprodukt, wie es durch das erfindungsgemäße Verfahren hergestellt wird, bestehend aus zwei Papierbögen 6, 7 und achtzehn auf dem ersten Papierbogen aufgebrachten Samenfeldern 9. Dieser Papierbogen ergibt im vorliegenden Beispiel achtzehn Postkarten die in einem nachfolgenden Verarbeitungsschritt lediglich noch voneinander getrennt werden müssen.

Es sollte deutlich sein, daß sich die vorliegende Erfindung auf die verschiedensten Produkte, wie zum Beispiel auch Verpackungen, Raumkörper etc. anwenden läßt.

## Patentansprüche

1. Papier-Kaschiermaschine zur Herstellung von 2-lagigen Papierprodukten mit einer Transporteinrichtung (1), einer Anleimstation (2), einer Kaschierstation (4), einer Pressstation (5), wobei die Transporteinrichtung (1) die Papierbögen (6,7) zu den einzelnen Stationen führt und zwischen der Anleimstation (2) und der Kaschierstation (4) eine Samenzuführvorrichtung (3) angeordnet ist, die keimfähige Pflanzensamen (8) auf einen ersten Bogen Papier (6) aufbringt,
**dadurch gekennzeichnet, dass**
die Samenzuführvorrichtung (3) mehrere nebeneinanderliegende, auf einer gemeinsamen Welle angeordnete Volumendosierelemente (13) aufweist, die Rotationskörper mit ausgeformten Dosierkammern (14) sind, um die keimfähigen Pflanzensamen (8) in mehreren nebeneinanderliegenden Samenfeldern (9) auf den ersten Bogen Papier (6) aufzubringen.

2. Papier-Kaschiermaschine nach Anspruch 1, **dadurch gekennzeichnet, dass** die Transporteinrichtung (1) über ein Steuerelement (10) derart steuerungstechnisch mit der Samenzuführvorrichtung (3) verbunden ist, dass ein Positionieren der Pflanzensamen (8) möglich ist.

3. Papier-Kaschiermaschine nach Anspruch 1 oder 2, **dadurch gekennzeichnet, dass** die Pressstation (5) Pressmittel (11) aufweist, die während des Anpressvorganges eine maximale Anpresskraft von 32 N ausüben.

4. Papier-Kaschiermaschine nach Anspruch 3, **dadurch gekennzeichnet, dass** die Pressstation (5) zumindest eine Weichwalze (11) aufweist.

5. Verfahren zur Herstellung eines 2-lagigen Papierproduktes, wobei ein erster Papierbogen (6) mittels einer Transporteinrichtung (1) einer Anleimstation (2) zugeführt wird und dort mit Leim versehen wird, dann einer Kaschierstation (4) zugeführt wird, die einen zweiten Papierbogen (7) auf den ersten Papierbogen (6) aufbringt und dann einer Pressstation (5) zugeführt wird, in der die beiden Papierbögen (6,7) zusammengepresst werden,
**dadurch gekennzeichnet, dass**
zwischen der Anleimstation (2) und der Kaschierstation (4) keimfähige Pflanzensamen (8) über mehrere nebeneinanderliegende, auf einer gemeinsamen Welle angeordneten Volumendosierelemente (13), die Rotationskörper mit ausgeformten Dosierkammern (14) sind, in mehreren nebeneinanderliegenden Samenfeldern (9) auf den ersten Bogen Papier (6) aufgebracht werden.

6. Verfahren nach Anspruch 5, **dadurch gekennzeichnet, dass** als keimfähige Pflanzensamen (8) eine Samenart mit einem maximalen Tausendkorngewicht von 20 g zugeführt wird.

7. Verfahren nach Anspruch 5 oder 6, **dadurch gekennzeichnet, dass** die Pflanzensamen (8) zum Schutz vor Leim und mechanischen Einwirkungen mit einer Schutzhülle, beispielsweise Methylcellulose, ummantelt werden.

8. Verfahren nach einem der Ansprüche 5-7, **dadurch gekennzeichnet, dass** die Papierbögen (6,7) mit einer Geschwindigkeit von max. 1800 Bögen pro Stunde transportiert werden.

9. Verfahren nach einem der Ansprüche 5-8, **dadurch gekennzeichnet, dass** bei der Anleimstation (2) ein biologisch abbaubarer Leim zugeführt wird.

10. Verfahren nach einem der Ansprüche 5-9, **dadurch gekennzeichnet, dass** die Samenfelder (9) in definierten Abständen zueinander auf den ersten Bogen Papier (6) aufgebracht werden.

## Claims

1. A paper laminating machine for producing two-layered paper products, comprising a transport means (1), a gluing station (2), a laminating station (4) and a pressing station (5), the transport means (1) delivering the sheets of paper (6,7) to the individual stations, and a seed supply means (3) being arranged between the gluing station (2) and the laminating station (4) for applying germinable seeds (8) onto a first sheet of paper (6),
**characterized in that**
the seed supply means (3) comprises a plurality of volume dosing elements (13) arranged next to each other on a common shaft and provided as rotary bodies with dosing chambers (14) formed therein for applying the germinable seeds (8) onto the first sheet of paper (6) in the form of a plurality of mutually adjacent seed fields (9).

2. The paper laminating machine according to claim 1, **characterized in that**, via a control element (10), the transport means (1) is connected to the seed supply means (3) in a manner allowing for a controlled positioning of the seeds (8).

3. The paper laminating machine according to claim 1 or 2, **characterized in that** the pressing station (5) comprises pressing means (11) which during the press-on process exert a maximum press-on force of 32 N.

4. The paper laminating machine according to claim 3, **characterized in that** the pressing station (5) comprises at least one soft roll (11).

5. A method for producing a two-layered paper product, wherein a first sheet of paper (6) is supplied by a transport means (1) to a gluing station (2) where it is provided with glue, then is supplied to a laminating station (4) which applies a second sheet of paper (7) onto the first sheet of paper (6), and then is supplied to a pressing station (5) where the two sheets of paper (6,7) are pressed together,
**characterized in that**
between the gluing station (2) and the laminating station (4), germinable seeds (8) are applied in the form of a plurality of mutually adjacent seed fields (9) onto the first sheet of paper (6) by means of a plurality of mutually adjacent volume dosing elements (13) arranged next to each other on a common shaft and provided as rotary bodies with dosing chambers (14) formed therein.

6. The method according to claim 5, **characterized in that** the supplied germinable seeds (8) are of a seed type having a maximum thousand seed weight of 20 g.

7. The method according to claim 5 or 6, **characterized in that** the seeds (8) are covered with a protective coating, e.g. methylcellulose, for protection from glue and mechanical influences.

8. The method according to any one of claim 5 - 7, **characterized in that** the sheets of paper (6,7) are transported with a speed of maximally 1800 sheets per hour.

9. The method according to any one of claim 5 - 8, **characterized in that**, in the gluing station (2), biologically degradable glue is supplied.

10. The method according to any one of claim 5 - 9, **characterized in that** the seed fields (9) are applied onto the first sheet of paper (6) at defined distances from each other.

## Revendications

1. Machine à contre-coller du papier pour la fabrication de produits en papier à double couche comprenant un dispositif de transport (1), un poste d'encollage (2), un poste de contre-collage (4) et un poste de presse (5), dans laquelle le dispositif de transport (1) amène les feuilles de papier (6,7) aux différents postes, un dispositif d'amenée des graines (3) qui applique des graines végétales pouvant germer sur une première feuille de papier étant disposé entre le poste d'encollage (2) et le poste de contre-collage (4),
**caractérisée en ce que**
le dispositif d'amenée des graines (3) comporte plusieurs éléments de dosage volumétrique (13) disposés les uns à côté des autres sur un axe commun, lesquels sont des corps de révolution avec des chambres de dosage (14) moulées, afin d'appliquer les graines végétales (8) pouvant germer dans plusieurs champs de graine (9) disposés les uns à côté des autres sur la première feuille de papier (6).

2. Machine à contre-coller du papier selon la revendication 1, **caractérisée en ce que** le dispositif de transport (1) est relié par une technique de commande au dispositif d'amenée des graines (3) via un organe de commande (10) de manière à ce que les graines végétales (8) puissent être positionnées.

3. Machine à contre-coller du papier selon la revendication 1 ou 2, **caractérisée en ce que** le poste de presse (5) présente des moyens de pressage (11) qui exercent une force de pression maximale de 32 N pendant l'opération de pressage.

4. Machine à contre-coller du papier selon la revendication 3, **caractérisée en ce que** le poste de presse (5) présente au moins un rouleau en fonte (11).

5. Procédé de fabrication d'un produit en papier à double couche dans lequel une première feuille de papier (6) est amenée via un dispositif de transport (1) à un poste d'encollage (2) où elle est enduite de colle, puis à un poste de contre-collage (4) qui applique une deuxième feuille de papier (7) sur la première feuille de papier (6) et puis à un poste de presse (5) dans lequel les deux feuilles de papier (6,7) sont comprimées l'une contre l'autre,
**caractérisé en ce que**,
entre le poste d'encollage (2) et le poste de contre-collage (4), des graines végétales (8) pouvant germer sont appliquées sur la première feuille de papier (6) dans plusieurs champs de graine (9) disposés les uns à côté des autres via plusieurs éléments de dosage volumétrique (13) disposés les uns à côté des autres sur un axe commun, lesquels éléments de dosage volumétrique (13) sont des corps de révolution avec des chambres de dosage (14) moulées.

6. Procédé selon la revendication 5, **caractérisé en ce qu'**une variété de graine ayant un poids pour 1000 grains de 20 g au maximum est fournie en tant que graine végétale (8) pouvant germer.

7. Procédé selon la revendication 5 ou 6, **caractérisé en ce que** les graines végétales (8) sont enrobées d'une enveloppe protectrice, par exemple en méthylcellulose, pour être protégées contre la colle et les effets mécaniques.

8. Procédé selon l'une quelconque des revendications 5 à 7, **caractérisé en ce que** les feuilles de papier (6,7) sont transportées à une vitesse max. de 1800 feuilles par heure.

9. Procédé selon l'une quelconque des revendications 5 à 8, **caractérisé en ce qu'**une colle biodégradable est fournie au niveau du poste d'encollage (2).

10. Procédé selon l'une quelconque des revendications 5 à 9, **caractérisé en ce que** les champs de graine (9) sont appliqués sur la première feuille de papier (6) à des intervalles définis les uns par rapport aux autres.
